# EUROPEAN PATENT APPLICATION

(11) **EP 1 298 928 A2**
(43) Date of publication of application: **02.04.2003**
(21) Application number: 02398005.5
(22) Date of filing: 27.09.2002
(51) Int. Cl.: H04N 7/18

(54) **Directional system for video cameras of any range of the spectrum**

(30) Priority: 27.09.2001 PT 10266701
(71) Applicant: Inesc Inovaçao - Instituto de Novas Tecnologias, 1000-029 Lisboa (PT)
(72) Inventor: Relvas Martins Simoes Pinto, Paulo Alexandre, Brejos de Azeitao, 2925-000 Azeitao (PT)
(74) Representative: Pereira da Cruz, Joao

(57) **Abstract**

Directional system for video cameras of any range of the spectrum. The present invention consists of the use of digitised maps and pictures in a computational platform (1), to remotely direct video cameras. Besides the computational platform, the system is also constituted by an electromechanical directional element (4) to which the video camera is coupled (5). The system is also characterised by having a data channel (2) for sending position information to the directional system, and for having a video channel (3) for transmission of the images captured by the camera. It constitutes an integral part of the invention a system for automatic centring of objects in the image (6), with the objective of allowing the accomplishment of great amplifications without the object leaving the field of view of the camera.

## Description

### OBJECTIVE OF THE INVENTION

The present invention is aimed to facilitate the operation of remotely directing video cameras in video surveillance systems, in particular in situations where the command orders are transmitted by means of communication with low rate or with large delays. The invention also facilitates the amplification operation through an automatic system of centring the object to observe.

### FIELD OF THE INVENTION

The application of the present invention extends to all the surveillance systems that use video cameras supported by electromechanical directional systems, commonly designated as *pan&tilt* and whose images are transported by any means of transmission to a control centre.

### STATE OF THE ART

There are currently several means to remotely direct video cameras. The most common is through the handling of an element denominated *joystick,* the operator being able through movements north-south and east-west on that joystick to direct the camera in elevation and azimuth. The joystick is connected to a controller that interprets those movements and that transforms them into commands for the directional element (*pan&tilt*). Another method of remotely directing the cameras is through a computer where, with the use of the mouse or using the arrow keys in the keyboards, the operation is executed. Any of these systems presents the inconvenience of being an incremental directional system, not allowing accurate directing of the cameras. In normal operation the operator acts on the device reacting to the image that is being observed in a monitor. If the delay between the sending and the reception of the movement order is significant, the directional system will continue to move even after the operator stops acting on the device. This implies that the operator will have to do a position adjustment, which may render the system impracticable in a many situations. The problem becomes more important as the transmission delay grows, the angular speed of the directional device is higher and/or the level of zoom of the lens grows. Some systems attenuate this problem by offering memory positions or position pre-definitions. The operator can direct the cameras to one of those positions by simply pressing a key. Nevertheless the existence of memories doesn't solve all the situations, because not always the position one wants to observe is memorised.

Another problem for the operators of this type of systems is commonly the handling of the amplification system denominated zoom. The technology has greatly enhanced the characteristics of the cameras, namely in respect to cameras with CCD technology. Today there are cameras at reasonable prices with optical amplifications of 21 times, to which we can later on add digital amplifications. It is normal, without losing significant quality, to dispose of digital amplifications of 8 times, which makes a total amplification of 168 times. With amplifications of this order it is now possible to cover large areas with only one camera , or to get to observe small details in more reduced areas. However the use of systems of amplification of the referred type raises important operation problems. The command to do an amplification of the target object will only be successful if it is exactly in the centre of the image. In the case where this is not verified, the amplification will cause the disappearance of the target object of the image, becoming again extremely difficult to re-acquire the object. This way the amplification is executed in slower steps depending on the size of the target object and of the wanted amplification.

### DESCRIPTION OF THE INVENTION

The directional system for video cameras is composed by a control centre (1) where the operator can, among other functions, direct the cameras and request amplifications, a data communication system (2) for command exchange, a system of video transmission (3), a directing system (4) and a video camera (5).

### Control Centre

The control centre (1) has electromechanical elements of control (joystick and mouse), computer programs, digitised maps, digitised pictures, touch sensitive monitors . These elements may be individually present in the system or they may appear combined. The control centre has a digitised map of the area to watch. The directing of the camera in azimuth is made by locating a cursor on the point to observe and pressing a key. After this operation the central sends through the data channel the respective command to the directional system, to which the camera is coupled. The video images are sent to the control centre by the respective channel. If needed, the operator will have to control the elevation angle. The control centre also has a panoramic digitised image covering an angle of 360 degrees, where by positioning the cursor on the place to observe and pressing a key it executes the directing of the camera to that spot. In this case it is not necessary to execute any control of elevation angle.

### Data channel

The physical data channel can be chosen among the usually used for this purpose: twisted pair, coax cable, optical fibre, phone line, cellular network, satellite or radio links. A communications protocol should exist on which commands will be sent for the directing of the camera. The bandwidth and the transmission rhythm can be variable, taking into consideration that these factors can influence the performance, namely in the response time of the system.

### Video channel

The video channel can be supported on any physical means, as already listed for the data channel, being of the same type or not, but if they are of the same type they can be integrated. The bandwidth and the modulation type to use can be variable, being adopted the most convenient to each situation.

### Directing system

The directing system is an electromechanical element to which the video camera is coupled and that allows direction control to a predetermined spot. The directional systems for video surveillance normally have two degrees of freedom, allowing directing the camera in azimuth and elevation. For such they usually have two motors for independent control of each of these elements. To obtain more appropriate angular speeds, these systems usually have a group of mechanical elements, besides other mechanisms. In the cases that the positioning precision is fundamental, the directing system has return mechanisms for control in closed loop.

### Video camera

The video cameras can be of the CCD type, tube, infra-red or using any other technology of image acquisition. The quality of the received images depends in a large part on the quality of the cameras used in the system. The resolution of the camera is fundamental because it influences the precision of the image centring system.

### Automatic image centring system

The present invention eliminates a problem of operation of video surveillance systems. When we intended to accomplish an amplification of a certain object (6), it can happen that for the intensity of the amplification, the object in observation is partially outside of the image (7) or disappears completely (8). This phenomenon happens whenever the object in observation isn't centred in the image. If the object is centred in the image (9) the execution of the amplification operation doesn't raise problems to the operator (10) (11). In any way, to centre an object manually before executing an amplification isn't a simple task. The automatic image centring system works in the following way:

The operator identifies in the image the object or person that it intends to observe with more detail. This image is visible to the operator in the control centre (1). The operator then places an aim on the target, which he can move on the image with a mouse, joystick, keyboard or touch sensitive screen , and presses a key. After this operation the control centre determines, based on the position of the target to the centre of the image and based on the focal distance of the lens, the angles that the directing system has to move in azimuth and elevation. This information is sent by the data channel to the directing system, whose coupled camera will send to the control centre the image where the target should now be centred. The operator can then execute the amplification that he wants without running the risk of the target leaving the field of view of the camera.

### BRIEF DESCRIPTION OF THE DRAWINGS

Figure (1): Block diagram of the system with one control centre (1), one directional system (4), one video camera (5), one channel for data transmission (2) and one channel for video transmission (3).
Figure (2): Calculation formula (13) to determine the movement angles. The target to observe (14) is projected through the zoom lens (15) onto the CCD sensor (16). Although the representation is only done for one of the elements, it is applied to both the azimuth and the elevation.
Figure (3): Example of the problem of the execution of an amplification of a certain target when it isn't centred with the image. To the left with the target not being centred, and to the right with the same target centred in the image.

### WAY OF ACCOMPLISHMENT

The present invention can be put into practice with a video camera (5) with output of composite video in PAL format, placed on a directing system (4) of the pan&tilt type, with an appropriate control system, a communication system (2) with radio modems at 9600 baud, a system of video transmission (3) using an RF emitter tied up to the camera, and a receiver linked to the control centre (1), a computer compatible or PC equivalent, that has a video acquisition board for reception of the images of the camera. The control of the whole system will be done by software running in the computer.

### INDUSTRIAL EXPLORATION

The industrial exploration of the invention is adapted to all the companies that develop, manufacture, install and operate video surveillance systems, and could bring a high value added to the performance of systems of this type, providing the operators with the best means to carry out their functions.

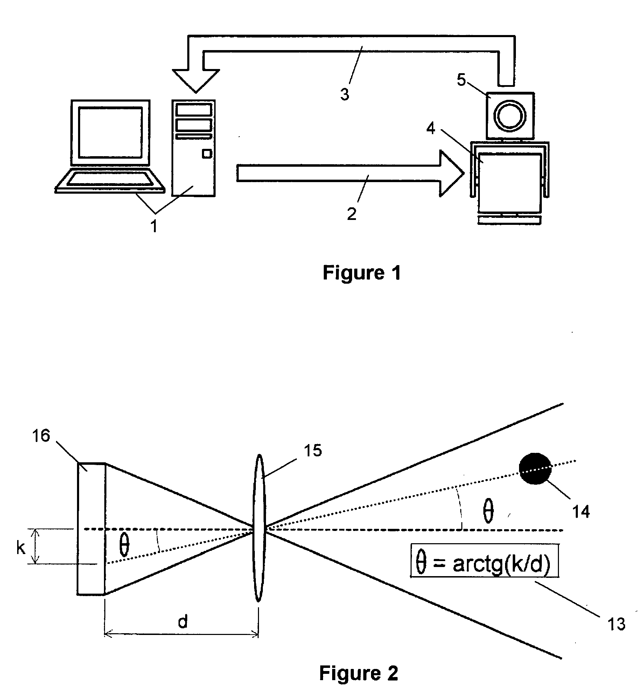

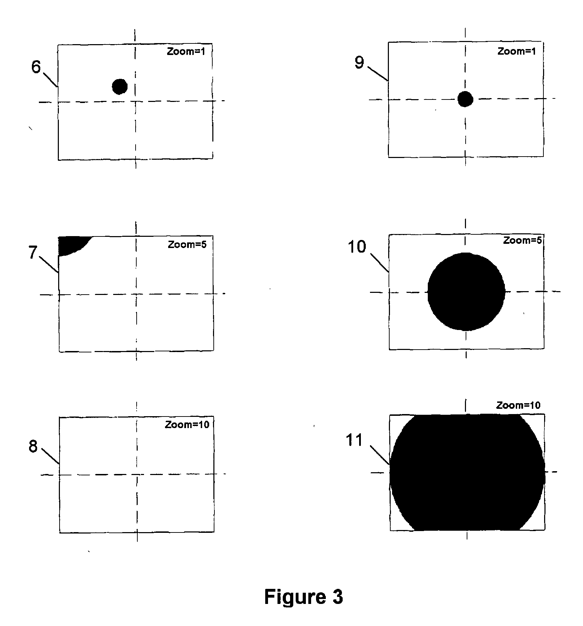

## Claims

1. System for directing video cameras of any range of the spectrum, **characterised by** using a digitised map of the observation area on a computational platform, for directing remote video cameras.

2. System for directing video cameras of any range of the spectrum, **characterised by** using a digitised panoramic image of the observation area on the said computational platform, for directing the said remote video cameras.

3. System for automatic centring in an image of an object, person or thing, **characterised by** the centring of the image to be accomplished using the information of the focal distance of the said camera and the deviation angle between the object, person or thing, and the centre of the image.

4. System according to claim 1, **characterised by** the directing of the said camera to be accomplished placing a cursor handled by the mouse on the point to observe of the said map and pressing a key.

5. System according to claim 1, **characterised by** the directing of the said camera to be accomplished by moving an aim on the said map and locating it on the point to observe, using the arrow keys of the keyboard of the said computational platform, followed by pressing a key.

6. System according to claim 1, **characterised by** the directing of the said camera to be accomplished by moving an aim on the said map and locating it on the point to observe, using a joystick and then pressing a key.

7. System according to claim 1, **characterised by** the directing of the said camera to be accomplished using a pen on a touch sensitive monitor and making pressure with the pen on the point of the said map that is intended to observe.

8. System according to claim 2, **characterised by** the directing of the said camera to be accomplished by placing a cursor handled by the mouse on the point to observe of the said image and pressing a key.

9. System according to claim 2, **characterised by** the directing of the said camera to be accomplished by moving an aim on the said image and locating it on the point to observe, using the arrow keys of the keyboard of the said computational platform, followed by the pressing of a key.

10. System according to claim 2, **characterised by** the directing of the said camera to be accomplished by moving an aim on the said image, and locating it on the point to observe, using a joystick and then pressing a key.

11. System according to claim 2, **characterised by** the directing of the said camera to be accomplished using a pen on the said touch sensitive monitor and making pressure with the pen on the point of the said image that is intended to observe.

12. System according to claim 3, **characterised by** the relative information to the said deviation angles to be calculated in agreement with the formula q = arctg (k / d), where k is the deviation to the centre of the said image, and d the focal distance of the lens.

13. System according to claim 3, characterised for on the said received image and on the object, person or thing to observe, to place a cursor handled by the mouse of the said computational platform and pressing a key.

14. System according to claim 3, characterised for on the said received image and on the object, person or thing to observe, to move an aim using the arrow keys of the keyboard of the computational platform.

15. System according to claim 3, characterised for on the said received image and on the object, person or thing to observe, to move an aim using a joystick.

16. System according to claim 3, **characterised by** the centring of the object, person or thing to observe to be accomplished using a pen on a touch sensitive monitor and making pressure with the pen on the point of the said image that is intended to centre.
